# EUROPEAN PATENT APPLICATION

(11) **EP 3 882 651 A2**
(43) Date of publication of application: **22.09.2021**
(21) Application number: 21150036.8
(22) Date of filing: 04.01.2021
(51) Int. Cl.: G01S 7/08, G01S 7/48, G01S 7/481, G01S 7/486, G01S 7/4912, G01S 17/08, G01S 7/4865

(54) **OBJECT DETECTION APPARATUS WITH OPTICAL SCANNING UNIT AND MOVABLE APPARATUS USING THE SAME**

(30) Priority: 18.03.2020 JP 2020048417
(71) Applicant: Ricoh Company, Ltd., Tokyo 143-8555 (JP)
(72) Inventor: KENTO, Nakamura, Tokyo, 143-8555 (JP); NAKAMURA, Tadashi, Tokyo, 143-8555 (JP); JUN, Kishiwada, Tokyo, 143-8555 (JP); ABE, Issei, Tokyo, 143-8555 (JP)
(74) Representative: J A Kemp LLP

(57) **Abstract**

An object detection apparatus (100) includes a light-emitting unit (11) configured to emit light; an optical scanning unit (13) configured to rotate a deflection face (13a) to deflect the light used as scanning light; a light-projection optical system (12) configured to project the scanning light to a detection region (500); a light-receiving optical system (14) configured to receive light reflected or light scattered from an object existing within the detection region (500), respectively as reflection light and scattered light; and a light receiving unit (15) configured to output at least a received-light signal of the reflection light or a received-light signal of the scattered light received by the light receiving system. A focusing light center axis of the light-receiving optical system (14) is non-parallel with respect to a projection light center axis of the light-projection optical system (12).

## Description

### BACKGROUND

### Technical Field

This disclosure relates to an object detection apparatus, and a movable apparatus.

### Background Art

Conventionally, object detection apparatuses, such as light detection and ranging, laser imaging detection and ranging (LIDAR) devices, mounted on a movable apparatuses, such as vehicle, are known. The object detection apparatus emits light to a detection region of a movable apparatus such as a front direction of the movable apparatus, and receives light reflected or scattered from an object existing in the detection region to detect presence or absence of the object and a distance to the object.

Further, one object detection apparatus includes an optical scanning unit for scanning light by rotating a deflection face that deflects the light, with which the one object detection apparatus projects the scanning light set by the optical scanning unit to the detection region.

However, as to the one object detection apparatus, a scanning angle of the scanning light may be limited due to a size of the deflection face, and the strength of deflection face may not be ensured.

### SUMMARY

As one aspect of the present disclosure, an object detection apparatus is devised. The object detection apparatus includes a light-emitting unit configured to emit light; an optical scanning unit configured to rotate a deflection face to deflect the light used as scanning light; a light-projection optical system configured to project the scanning light to a detection region; a light-receiving optical system configured to receive light reflected or light scattered from an object existing within the detection region, respectively as reflection light and scattered light; and a light receiving unit configured to output at least a received-light signal of the reflection light or a received-light signal of the scattered light received by the light receiving system. A projection light center axis of the light-receiving optical system is non-parallel with respect to a focusing light center axis of the light-projection optical system.

As another aspect of the present disclosure, a movable apparatus including an object detection apparatus is devised.

As to the above described aspects of this disclosure, the deflection face of the optical scanning unit can be downsized.

### BRIEF DESCRIPTION OF THE DRAWINGS

A more complete appreciation of the description and many of the attendant advantages and features thereof can be readily acquired and understood from the following detailed description with reference to the accompanying drawings, wherein:
FIG. 1 is an example of a configuration of an object detection apparatus according to a first embodiment;
FIG. 2 is an example of hardware block diagram of a control unit according to a first embodiment;
FIG. 3 is an example of functional block diagram of a control unit according to a first embodiment;
FIG. 4 is an example of diagram illustrating normalized projection light intensity and normalized received light intensity;
FIG. 5A illustrates an example of configuration of a gable-roof optical element according to a comparative example;
FIG. 5B illustrates normalized projection light intensity of a gable-roof optical element of FIG. 5A;
FIG. 5C illustrates an example of configuration of a gable-roof optical element 123 according to a first embodiment;
FIG. 5D illustrates normalized projection light intensity of a gable-roof optical element of FIG. 5C;
FIG. 6A illustrates an example of configuration of an optical element according to a comparative example;
FIG. 6B illustrates normalized projection light intensity of an optical element of FIG. 6A;
FIG. 6C illustrates an example of configuration of an eccentric optical element according to a first embodiment;
FIG. 6D illustrates normalized projection light intensity of an eccentric optical element of FIG. 6C;
FIG. 7 is an example of functional block diagram of a control unit provided for an object detection apparatus according to a second embodiment;
FIG. 8 is an example of configuration of a movable apparatus according to a third embodiment; and
FIG. 9 is an example of hardware block diagram of a movable apparatus according to a third embodiment.

The accompanying drawings are intended to depict embodiments of the this disclosure and should not be interpreted to limit the scope thereof. The accompanying drawings are not to be considered as drawn to scale unless explicitly noted.

### DETAILED DESCRIPTION

A description is now given of exemplary embodiments of the present inventions. It should be noted that although such terms as first, second, etc. may be used herein to describe various elements, components, regions, layers and/or units, it should be understood that such elements, components, regions, layers and/or units are not limited thereby because such terms are relative, that is, used only to distinguish one element, component, region, layer or unit from another region, layer or unit. Thus, for example, a first element, component, region, layer or unit discussed below could be termed a second element, component, region, layer or unit without departing from the teachings of the present inventions.

In addition, it should be noted that the terminology used herein is for the purpose of describing particular embodiments only and is not intended to be limiting of the present inventions. Thus, for example, as used herein, the singular forms "a", "an" and "the" are intended to include the plural forms as well, unless the context clearly indicates otherwise. Moreover, the terms "includes" and/or "including," when used in this specification, specify the presence of stated features, integers, steps, operations, elements, and/or components, but do not preclude the presence or addition of one or more other features, integers, steps, operations, elements, components, and/or groups thereof.

Hereinafter, a description is given of one or more embodiments with reference to the drawings, but the present invention is not limited to embodiment described in this description. In each of the following drawings, the same reference numerals are used for the same reference elements, and the description thereof may be omitted.

In the embodiment, the central axis of a light projection optical system, which projects the light to a detection region by rotating a deflection face is set non-parallel to the central axis of a light converging optical system, in which the light reflected (reflection light) or the light scattered (scattered light) from an object existing in the detection region is converged. With this configuration, a size of the deflection face can be reduced by setting a projection light intersection position where the projection light enters the deflection face and a focusing light intersection position where the light reflects or scatters from the object enters the deflection face closer.

The center axis of the light projection is an axis extending from the center of the light emitting surface of the light-emitting unit to the normal direction of the light emitting surface.

However, when a light-emitting unit such as a vertical-cavity surface-emitting laser (VCSEL) having a plurality of light-emitting units is used, the axis extending along the normal direction of the light-emitting surface from the center of the plane where the light-emitting units is arrayed corresponds to the center axis of the light projection.

If the light emitted from the light-emitting element is reflected by a mirror, the center axis of the light projection is specified in a state in which the reflection path is unfolded, that is a state in which the light emitted from the light-emitting element is not reflected.

The focusing light center axis is an axis extending along the normal direction of the light-receiving face from the center of the light-receiving face in the light receiving unit.

However, when the light receiving unit including a plurality of light receiving elements, such as a light receiving element array, arranged on a plane, is used, an axis extending along the normal direction of the light-receiving face from the center of the light receiving element array corresponds to the focusing light center axis.

If the light reflected by the mirror is received by the light receiving unit, the center axis is specified in a state in which the reflection path is unfolded.

Hereinafter, with reference to drawings, a description is given of an example of an object detection apparatus 100. In the embodiments, in the three dimensional orthogonal coordinate system (x, y, z), a scanning direction of light, which is orthogonal to a rotation axis of the deflection face in the optical scanning unit is set as X-direction, a direction extending along the rotation axis of the deflection face of the optical scanning unit is set as Y-direction, and a direction intersecting or crossing both of the X-direction and Y-direction is set as Z-direction.

### (First Embodiment)

### (Configuration of Object Detection Apparatus)

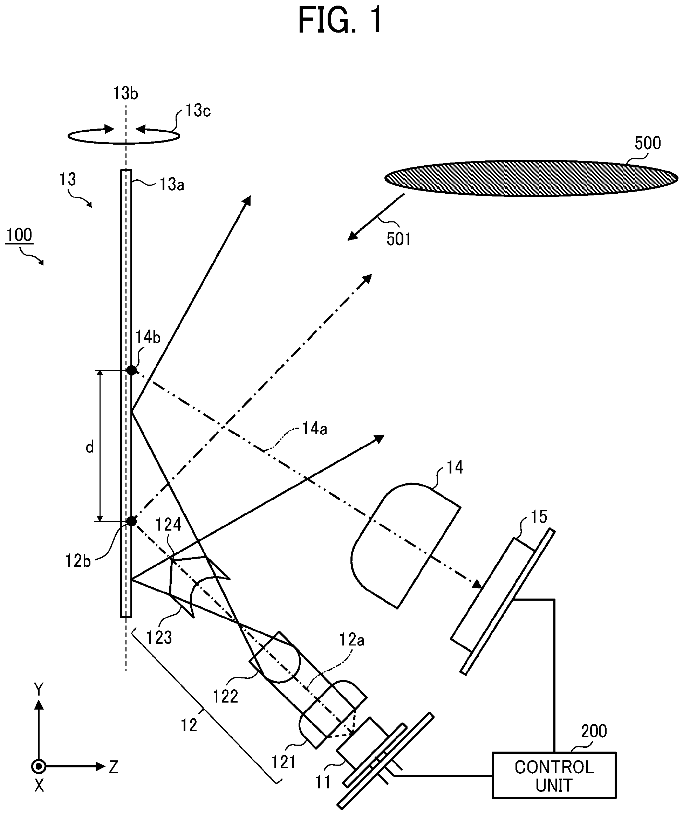

FIG. 1 is an example of a configuration of the object detection apparatus 100 according to a first embodiment. As illustrated in FIG. 1, the object detection apparatus 100 includes, for example, a semiconductor laser 11, a light-projection optical system 12, a micro electro mechanical systems (MEMS) mirror 13, a light-receiving optical system 14, a photodiode 15, and a control unit 200.

The semiconductor laser 11 is a light-emitting unit that emits laser light or laser beam. The semiconductor laser 11 can emit laser light at a given light emission timing in response to a control signal received from the control unit 200. The laser light is an example of "light." The laser light may be pulse laser light or continuous wave (CW) laser light.

Although the wavelength of the laser light projected from the semiconductor laser 11 is not particularly limited, when the object detection apparatus 100 is mounted on an automobile or the like, a non-visible light, which cannot be perceived by an eye of person, such as light having the wavelength of 760 nm or longer is preferable. The laser light projected from the semiconductor laser 11 enters the light-projection optical system 12.

The light-projection optical system 12 is an optical system for projecting the laser light emitted from the semiconductor laser 11 to a detection region 500 via the MEMS mirror 13. The detection region 500 is a three dimensional space region, in which one or more objects (hereinafter, object) to be detected may exist.

As illustrated in FIG. 1, the light-projection optical system 12 includes, for example, a collimating lens 121, a cylindrical lens 122, and a gable-roof-type optical element 123 (hereinafter, gable-roof optical element 123). Each of the collimating lens 121, cylindrical lens 122, and gable-roof optical element 123 can be made of glass material or plastic material.

The collimate lens 121 is an axially symmetrical lens that converts divergent laser light emitted from the semiconductor laser 11 and propagating as a spherical wave into parallel laser light or near-parallel laser light (substantially parallel laser light).

The cylindrical lens 122 is a non-axially symmetrical lens having no curvature in the X-direction and having a given curvature in the direction orthogonal to the X-direction. The cylindrical lens 122 focuses the near-parallel laser light coming from the collimate lens 121 as the laser light in the direction orthogonal to the X-direction alone to convert the near-parallel laser light to the laser light propagating in the Y-direction. Then, the laser light exiting from the cylindrical lens 122 enters into the gable-roof optical element 123.

The gable-roof optical element 123 is used as a regulating unit that regulates a light intensity distribution of laser light in accordance with an angle of view of the light-projection optical system 12. The gable-roof optical element 123 is an optical element having a gable roof shape formed with a ridge 124 on the exit side of the laser light (light exit side).

The ridge 124 is a horizontal portion on the top of the roof of the gable-roof optical element 123. The exit side of laser light of the gable-roof optical element 123 is formed such that the ridge 124 extends along the X-direction. The direction in which the ridge 124 is extending, corresponds to the X-direction in FIG. 1.

On the other hand, at the incident side of laser light (light incident side) of the gable-roof optical element 123, a concave shape having curvature is formed only in the direction orthogonal to the direction extending the ridge 124.

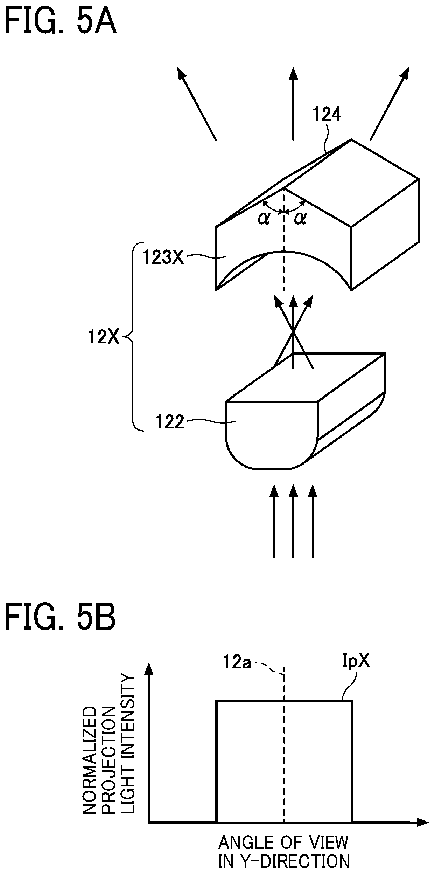

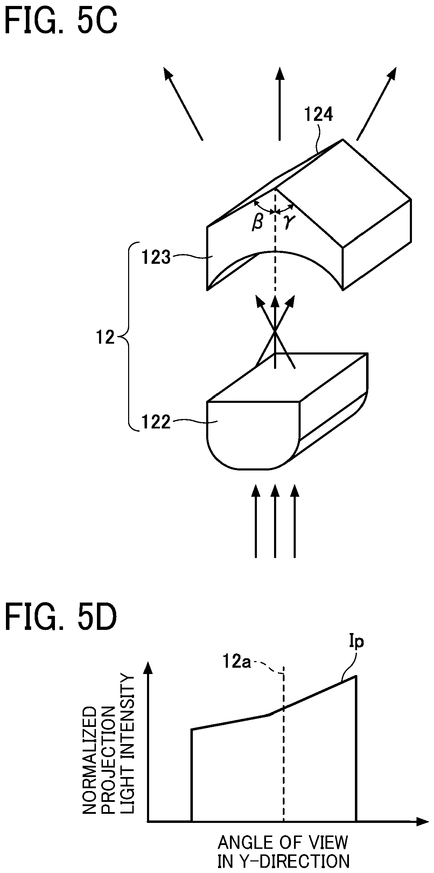

The laser light exiting from the gable-roof optical element 123 has a given light intensity distribution along the Y-direction, and becomes a linear laser light extending along the Y-direction. The structure of the gable-roof optical element 123 and the light intensity distribution of the linear laser light is to be described in detail with reference to FIG. 5.

The light-projection optical system 12 is configured so that a light projection center axis 12a (optical axis) is inclined with a given angle relative to the Y-direction. The inclination angle is, for example, 45 degrees. Further, the light projection center axis 12a is arranged to be orthogonal to the X-direction. The laser light exiting from the light-projection optical system 12 inclines 45 degrees relative to the Y-direction, and enters the MEMS mirror 13.

The MEMS mirror 13 is an optical scanning unit used for scanning the laser light by rotating a deflection face 13a used for deflecting the laser light as scanning light. The MEMS mirror 13 can be fabricated by performing microfabrication of silicon or glass by using micromachining technology applying the semiconductor manufacturing technology.

The MEMS mirror 13 includes a movable part including the deflection face 13a, and a drive beam connected to the movable part. The drive beam is configured by stacking super-thin piezoelectric material on an elastic beam having elasticity. The MEMS mirror 13 reciprocally rotates or swings the movable part about an rotation axis 13b, set along the Y-direction (in a direction of arrow 13c), in accordance with the applied voltage to change the angle of the deflection face 13a. With this configuration, the linear laser light entering the deflection face 13a and extending along the Y-direction can be scanned in the X-direction.

In FIG. 1, the deflection face 13a of the MEMS mirror 13 alone is illustrated to simplify the drawing. The MEMS mirror 13 can employ known mirrors, such as the MEMS mirror disclosed in JP-2018-180565-A.

The laser light scanned by the MEMS mirror 13 is projected toward the detection region 500. If an object exists within the detection region 500, the projected laser light is reflected or scattered by the object, and then returned back to the object detection apparatus 100 as return light 501. Then, the return light 501 deflected by the deflection face 13a of the MEMS mirror 13 enters the light-receiving optical system 14.

The light-receiving optical system 14 is an optical system used for focusing at least one of light reflected or light scattered by the object existing in the detection region 500. The light-receiving optical system 14 includes an axially symmetrical lens made of glass material or plastic material.

The light-receiving optical system 14 focuses the return light 501 on the light-receiving face of the photodiode 15. If the light-receiving optical system 14 is arranged with a given configuration, the return light 501 is focused on the light-receiving face of the photodiode 15, and the return light 501 is received with the higher light intensity, which is preferable. However, the return light 501 is not necessarily required to be focused.

The light-receiving optical system 14 is configured with a given configuration so that a focusing light center axis 14a (optical axis) is inclined with a given angle relative to the Y-direction. The inclination angle is, for example, 32 degrees. Further, the focusing light center axis 14a is arranged to be orthogonal to the X-direction.

The photodiode 15 is a light receiving unit that receives the return light 501 focused by the light-receiving optical system 14, and outputs the received-light signal, which is a voltage signal corresponding to the received light intensity, to the control unit 200. The photodiode 15 is arranged with the semiconductor laser 11 side by side in a direction orthogonal to the X-direction (an example of a given direction).

The control unit 200 is a control device that controls the driving of the semiconductor laser 11 and the MEMS mirror 13, acquires or obtains the object information based on the received-light signal by the photodiode 15, and outputs the object information.

The control unit 200 acquires distance information or range information between an object in the detection region 500 and the object detection apparatus 100 by calculating the distance information based on a time difference between a light emission timing (light emission start time) of the semiconductor laser 11 and a light reception timing (light reception time) of the return light 501 by the photodiode 15.

In a case where no object exists within the detection region 500, information indicating that no object exists, determined based on the received-light signal output from the photodiode 15, can be output.

As to the object detection apparatus 100, the light-emitting unit is not limited to the semiconductor laser 11, but the light-emitting unit can employ, for example, vertical cavity surface emitting laser (VCSEL), and light emitting diode (LED).

Further, the light-projection optical system 12 may include an optical element, such as lens, reflection mirror, prism, or the like in addition to the collimating lens 121, the cylindrical lens 122, and the gable-roof optical element 123. Further, the light-projection optical system 12 may include a diffusion plate to adjust a spread angle of laser light by using the diffusion effect.

Further, the optical scanning unit is not limited to the MEMS mirror 13. For example, the optical scanning unit can employ Galvano mirror or polygon mirror, in which the deflection face is rotated about the rotational axis. Further, the MEMS mirror 13 can employ various drive methods, such as piezoelectric method and electrostatic method, for driving the MEMS mirror 13.

The light-receiving optical system 14 is not limited to a configuration having one lens alone, but can be configured with optical elements, such as a plurality of lenses, reflection mirror, prism, or the like.

The light receiving unit is not limited to the photodiode 15, but can employ Avalanche Photo Diode (APD), Single Photo Avalanche Photo Diode (SPAD) such as Geiger-mode Avalanche Photo Diode, and Time of Flight (TOF), or the like.

In the first embodiment, as illustrated in FIG. 1, a projection light intersection position 12b where a projection light center axis 12a and the deflection face 13a intersects, and a focusing light intersection position 14b where a focusing light center axis 14a intersects the deflection face 13a are set as different positions, and the projection light intersection position 12b and the focusing light intersection position 14b are spaced apart for an interval "d" along the Y-direction as illustrated in FIG. 1.

The smaller the interval "d", the shorter the length of the deflection face 13a along the Y-direction and the smaller the size of the deflection face 13a. Further, the smaller the interval between the semiconductor laser 11 and the photodiode 15, the smaller interval "d" can be set.

However, since the semiconductor laser 11, the light-projection optical system 12, the light-receiving optical system 14, and the photodiode 15 have the respective given size, the respective components may interfere with each other if the respective components are disposed too closer, and thereby the interval between the semiconductor laser 11 and the photodiode 15 cannot be set to a too-small interval.

Further, if the interval between the semiconductor laser 11 and the photodiode 15 is too small, the heat generation of the semiconductor laser 11 is transmitted to the photodiode 15, causing thermal noise or electromagnetic noise, with which the detection precision of the object detection apparatus 100 may deteriorate. Therefore, the interval between the semiconductor laser 11 and the photodiode 15 cannot be set to a too-small interval in view of the noise.

As to the first embodiment, the object detection apparatus 100 is configured by setting the focusing light center axis 14a and the projection light center axis 12a not parallel with each other. Specifically, the light-projection optical system 12 is configured by inclining the projection light center axis 12a with 45 degrees relative to the Y-direction, and the light-receiving optical system 14 is configured by inclining the focusing light center axis 14a with 32 degrees relative to the Y-direction to set the focusing light center axis 14a and the projection light center axis 12a not parallel with each other.

By setting the focusing light center axis 14a and the projection light center axis 12a not parallel with each other, and by setting the respective inclination angles of the focusing light center axis 14a and the projection light center axis 12a to make the interval "d" smaller, the deflection face 13a can be made smaller by setting the smaller interval "d" without setting the too-small interval between the semiconductor laser 11 and the photodiode 15.

Since the rotation axis 13b of the MEMS mirror 13 extends along the Y-direction, the projection light center axis 12a inclines 45 degrees relative to the rotation axis 13b, and the focusing light center axis 14a inclines 32 degrees relative to the rotation axis 13b.

Further, the inclination angle of the projection light center axis 12a relative to the Y-direction is not limited to 45 degrees, and the inclination angle of the focusing light center axis 14a relative to the Y-direction is not limited to 32 degrees. If the projection light center axis 12a and the focusing light center axis 14a are set non-parallel, the inclination angle of the projection light center axis 12a and the inclination angle of the focusing light center axis 14a can be appropriately set to given angles in accordance with the direction where an object exists.

### (Hardware Configuration of Control Unit)

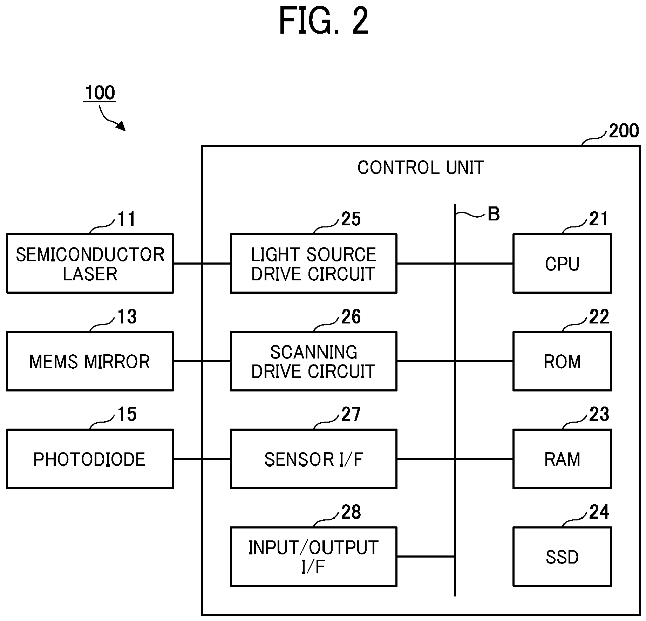

Hereinafter, with reference to FIG. 2, a description is given of hardware configuration of the control unit 200 provided for the object detection apparatus 100. FIG. 2 is an example of hardware block diagram of the control unit 200.

As illustrated in FIG. 2, the control unit 200 includes, for example, a central processing unit (CPU) 21, a read only memory (ROM) 22, a random access memory (RAM) 23, a solid state drive (SSD) 24, a light source drive circuit 25, a scanning drive circuit 26, a sensor interface (I/F) 27, and an input/output (I/F) 28 as hardware resources. The hardware resources are electrically connected to each other via a system bus B.

The CPU 21, which is a processor, reads programs from a memory, such as the ROM 22 and SSD 24, on the RAM 23, and executes the programs to perform various processing for controlling various functions of the control unit 200 entirely. Further, some of the functions of the CPU 21 may be implemented by an electronic circuit, such as application specific integrated circuit (ASIC), and field-programmable gate array (FPGA).

The ROM 22 is a non-volatile semiconductor memory capable of retaining programs and data even if the power supply is turned off. The ROM 22 stores programs and data, such as Basic Input/Output System (BIOS), Operating System (OS) setting, or the like, which are executed when activating the control unit 200.

The RAM 23 is a volatile semiconductor memory capable of retaining programs and data.

The SSD 24 is a non-volatile memory which stores programs and various data executable by the control unit 200. Further, a hard disk drive (HDD) may be provided instead of the SSD.

The light source drive circuit 25, electrically connected to the semiconductor laser 11, is an electrical circuit that outputs drive signals, such as drive voltage to the semiconductor laser 11 in response to receiving the control signal input from the CPU 21. The drive signal can be a rectangular wave, sine wave, or a voltage waveform having a given waveform shape. The light source drive circuit 25 can modulate a frequency of drive signal by changing a frequency of voltage waveform.

The scanning drive circuit 26, electrically connected to the MEMS mirror 13, is an electrical circuit that outputs drive signals, such as drive voltage to the MEMS mirror 13 in response to receiving the control signal input from the CPU 21.

The sensor I/F 27 is an interface, electrically connected to the photodiode 15, receives the received-light signal output from the photodiode 15.

The input/output I/F 28 is an interface connectable to an external device, such as an external controller or personal computer (PC) mounted on a movable apparatus such as vehicle, which receives data such as detection conditions, and transmits data on information of detected object. Further, the input/output I/F 28 can be configured to be connected to a network, such as the Internet, to transmit and receive data.

### (Functional Configuration of Control Unit)

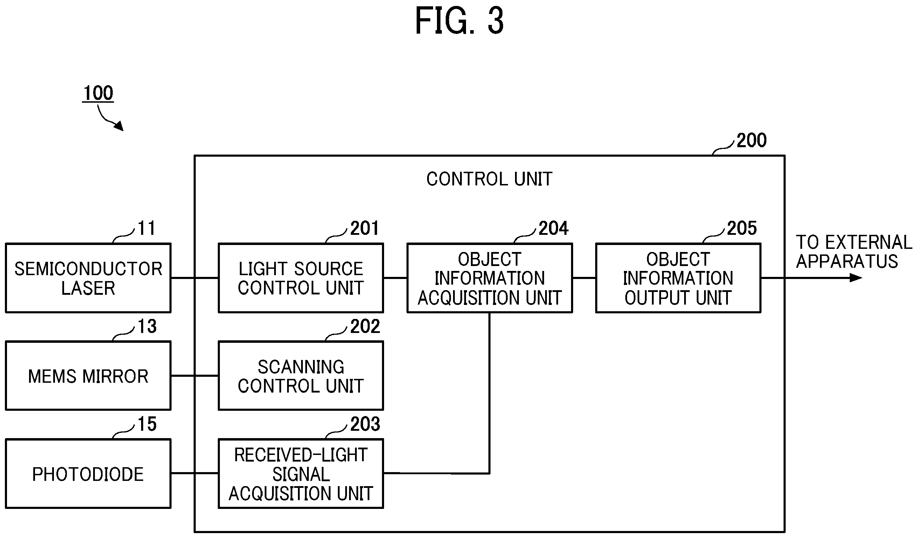

Hereinafter, with reference to FIG. 3, a description is given of functional configuration of the control unit 200. FIG. 3 is an example of functional block diagram of the control unit 200. As illustrated in FIG. 3, the control unit 200 includes, for example, a light source control unit 201, a scanning control unit 202, a received-light signal acquisition unit 203, an object information acquisition unit 204, and an object information output unit 205.

The functions of the light source control unit 201, the scanning control unit 202, and the object information acquisition unit 204 are implemented by executing a given program by the CPU 21. Further, the function of the received-light signal acquisition unit 203 is implemented by the sensor I/F 27, and the function of the object information output unit 205 is implemented by the input/output I/F 28.

The light source control unit 201 controls an emission or projection of laser light performed by the semiconductor laser 11. The light source control unit 201 can control the light emission timing of the laser light emitted and projected by the semiconductor laser 11 to the detection region 500 in accordance with a reference signal based on the clock of the CPU 21.

The received-light signal acquisition unit 203 acquires or receives a voltage signal corresponding to the light intensity of the return light 501 output by the photodiode 15, and outputs the voltage signal to the object information acquisition unit 204. Further, the scanning control unit 202 controls a rotation driving of the MEMS mirror 13.

The object information acquisition unit 204 receives information on the light emission timing of the laser light emitted by the semiconductor laser 11 and projected to the detection region 500, and receives information on the light reception timing when the photodiode 15 receives the return light 501.

Then, the object information acquisition unit 204 acquires the distance information between an object existing in the detection region 500 and the object detection apparatus 100 by calculating the distance information based on the time difference between the light emission timing (light emission start time) of the semiconductor laser 11 and the light reception timing (light reception time) of the return light 501 by the photodiode 15.

In a case where no object exists within the detection region 500, information indicating that no object exists, determined based on the received-light signal output from the photodiode 15, can be acquired. For example, if the received-light signal level is lower than a given threshold level, the object information acquisition unit 204 may determine that the object does not exist within the detection region 500.

The object information acquisition unit 204 can output, to an external device or apparatus, object information including the distance information between the object and the object detection apparatus 100 and the information indicating that the object does not exist via the object information output unit 205.

The object information includes, for example, distance image or the like. The distance image is an image that is generated by arranging distance data indicating the distance to the object acquired for each pixel in two dimensional plane in accordance to the position of each pixel. The distance image is, for example, an image generated by converting the distance to luminance of each pixel. In other words, the distance image is three dimensional information indicating the position of the object within the detection region 500.

A method of detecting the object employs, for example, a time-of-flight (TOF) method. The TOF method can be performed by applying known technologies disclosed, for example, in JP-2018-77143-A.

### (Normalized Projection Light Intensity and Normalized Received Light Intensity)

As to the object detection apparatus 100, the detection sensitivity of object information becomes higher as the light intensity of the return light 501 becomes greater. Further, the greater the light intensity of laser light projected to the object, the light intensity of the return light 501 becomes greater. Therefore, the detection sensitivity of object information becomes higher if the laser light having the greater light intensity is projected to a region (direction) corresponding to the detection region 500 where probability of existence of object is higher.

For example, when the object detection apparatus 100 is mounted on a machine, such as construction machine (e.g., shovel car) and forklift, to detect an obstacle existing in front of the construction machine using the object detection apparatus 100, since the obstacle exists on ground or floor, a lower direction viewed from the machine becomes a direction where probability of existence of object is higher. Therefore, the detection sensitivity of obstacle information on the ground and floor becomes higher if the laser light having a greater light intensity can be projected toward the lower direction.

On the other hand, when receiving the return light 501, it is preferable that the detection sensitivity of object information is uniform for any region (direction) where the object exists. Further, the more uniform the light intensity of the return light 501 for the object, the detection sensitivity of object information becomes more uniform. Therefore, when receiving the return light 501, it is preferable to receive the return light 501 corresponding to the object with uniform light intensity for any region (direction) where the object exists.

As to the first embodiment, the normalized projection light intensity of the light-projection optical system 12 and the normalized received light intensity of the light-receiving optical system 14 can be set to a given state.

The normalized projection light intensity is the light intensity for the laser light projected by light-projection optical system 12 corresponding to an angle of view of the light-projection optical system 12. The normalized projection light intensity is obtained by normalizing the light intensity of each angle of view using the light intensity where the light intensity becomes the maximum.

The angle of view of the light-projection optical system 12 refers to a light projection angle of the laser light projected from the light-projection optical system 12 using the projection light center axis 12a as the reference axis. Further, as to the object detection processing performed by the object detection apparatus 100, an effective light projection angle range for performing the object detection processing is a specific angle range that can obtain the light intensity of 50% or more with respect to the maximum projection light intensity.

The normalized received light intensity is the light intensity for the laser light received by the light-receiving optical system 14 corresponding to an angle of view of the light-receiving optical system 14. The normalized received light intensity is obtained by normalizing the light intensity of each angle of view using the light intensity where the light intensity becomes the maximum. Further, the angle of view of the light-receiving optical system 14 refers to an incident angle of laser light entering the light-receiving optical system 14 using the focusing light center axis 14a as the reference axis.

Further, the normalized received light intensity is not determined by the actual light intensity, but is determined by a numerical aperture of the light-receiving optical system 14. The normalized received light intensity is a value normalized for each angle of view taking into consideration of decreased efficiency caused by vignetting of light and the influence of the numerical aperture of lens when the light returning from the detection region 500 enters the photodiode 15.

Further, as to the object detection processing performed by the object detection apparatus 100, an effective light receiving angle range for performing the object detection processing is a specific angle range that can obtain the light intensity of 50% or more with respect to the maximum received light intensity.

In the first embodiment, since the projection laser light extends along the Y-direction, the angle of view in the Y-direction is especially becomes important. Each of the normalized projection light intensity and the normalized received light intensity is determined based on the light intensity for the linear laser light extending along the Y-direction at each angle of view in the Y-direction.

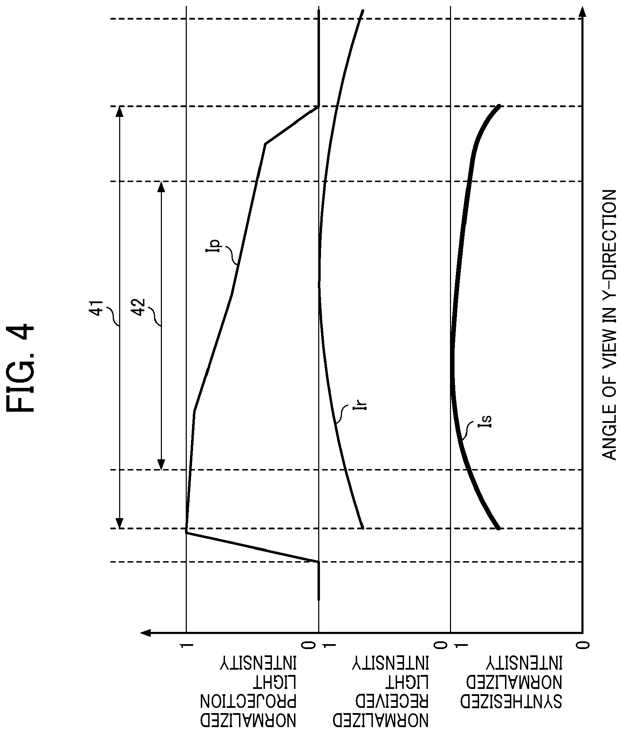

FIG. 4 is an example of diagram illustrating the normalized projection light intensity and the normalized received light intensity. FIG. 4 illustrates three graphs at the upper, the middle, and the bottom sides. The upper graph indicates the normalized projection light intensity Ip, the middle graph indicates the normalized received light intensity Ir, and the bottom graph indicates the synthesized normalized intensity Is. Further, the horizontal axis represents the angle of view in the Y-direction. In the first embodiment, since the object detection apparatus 100 is disposed by aligning the Y-direction to the gravitational direction, the negative side of the horizontal axis represents the lower side closer to the ground and floor, and the positive side of the horizontal axis represents the upper side in a space.

The synthesized normalized intensity Is can be obtained as a product multiplying the normalized projection light intensity Ip and the normalized received light intensity Ir for each angle of view. The photodiode 15 acquires a received-light signal according to the synthesized normalized intensity Is.

In FIG. 4, a shared region 41 corresponds to a pre-set angle region, in which the angle of view is shared by the light-projection optical system 12 and the light-receiving optical system 14.

As illustrated in FIG. 4, the normalized projection light intensity Ip is set with a particular distribution, in which the light intensity at the lower side is set greater than the light intensity at the upper side, and the maximum value of the normalized projection light intensity Ip is set at a given angle of view at the lower side. With this setting, the detection sensitivity of object information can be increased for an object existing at the lower side.

Further, the normalized received light intensity Ir is set with a particular distribution, in which the light intensity at the upper side is set greater than the light intensity at the lower side, and the maximum value of the normalized received light intensity Ir is set at a given angle of view at the upper side. With this above described configuration, the angle of view that maximizes the normalized projection light intensity in the light-projection optical system 12 and the angle of view that maximizes the normalized received light intensity in the light-receiving optical system 14 becomes different.

Further, as to the synthesized normalized intensity Is, since the particular distribution of the normalized received light intensity Ir and the particular distribution of the normalized projection light intensity Ip can be cancelled for some level by multiplying the particular distribution of the normalized received light intensity Ir and the particular distribution of the normalized projection light intensity Ip, a uniform region 42, in which the synthesized normalized intensity Is becomes substantially uniform, can be formed.

In other words, the object detection apparatus 100 includes the uniform region 42 as the angle of view region, in which the product of the normalized projection light intensity Ip of the light-projection optical system 12 and the normalized received light intensity Ir of the light-receiving optical system 14 becomes uniform.

By receiving the return light 501 entering the light-receiving optical system 14 using the photodiode 15 within the angle of view corresponding to the uniform region 42, the object information can be detected with substantially uniform sensitivity irrespective to the angle of view in the Y-direction.

### (Gable-Roof Optical Element)

Hereinafter, with reference to FIG. 5, a description is given of the gable-roof optical element 123, which is used as the regulating unit that regulates the light intensity distribution of the laser light in accordance with the angle of view of the light-projection optical system 12. FIG. 5 illustrates a diagram illustrating an example of the gable-roof optical element 123.

FIG. 5A illustrates an example of configuration of a gable-roof optical element 123X according to a comparative example. FIG. 5B illustrates the normalized projection light intensity of the gable-roof optical element 123X of FIG. 5A.

FIG. 5C illustrates an example of configuration of the gable-roof optical element 123 according to the first embodiment. FIG. 5D illustrates the normalized projection light intensity of the gable-roof optical element 123 of FIG. 5C.

As illustrated in FIG. 5A, the gable-roof optical element 123X of the comparative example is formed so that the roof gradient is symmetrical across the ridge 124. In other words, the roof gradient "α" of two roof segments sandwiching the ridge 124 is formed to be equal.

When the light-projection optical system 12X is configured by including the gable-roof optical element 123X, the distribution of the normalized projection light intensity corresponding to the angle of view in the Y-direction becomes horizontal as illustrated in FIG. 5B. With this configuration, a top-hat shaped laser light having the uniform light intensity in accordance with the angle of view in the Y-direction can be projected.

On the other hand, as illustrated in FIG. 5C, the gable-roof optical element 123 according to the first embodiment is formed so that the roof gradient becomes asymmetric across the ridge 124. In other words, the roof gradient "β" and the roof gradient "γ" of the respective two roof segments sandwiching the ridge 124 are formed to be different with each other. For example, the roof gradient "γ" is set greater than the roof gradient "β", such as γ = 40 degrees and β = 20 degrees.

In this case, as illustrated in FIG. 5D, the normalized projection light intensity Ip has a particular light intensity distribution, in which the light intensity becomes greater at the side of the roof gradient γ having a greater gradient, and the light intensity becomes smaller at the side of the roof gradient "β" having a smaller gradient.

Further, in the first embodiment, the ridge 124 and the projection light center axis 12a intersect each other, but the ridge 124 and the projection light center axis 12a may not be required to be intersected. For example, the gable-roof optical element 123 can be disposed by shifting the ridge 124 to the +Y-direction side or the -Y-direction side relative to the light projection center axis 12a.

By setting the roof gradient of the side corresponding to the lower side in the Y-direction greater than the roof gradient of the side corresponding to the upper side in the Y-direction, as illustrated in FIG. 4, the normalized projection light intensity Ip having the light intensity distribution having the greater light intensity at the lower side can be obtained.

Further, the object detection apparatus 100 can be provided with the gable-roof optical element 123X illustrated as the comparative example in FIG. 5A. In this case, the light intensity distribution that is asymmetrical relative to the light projection center axis 12a cannot be obtained, but the top-hat shaped laser light having the uniform light intensity in accordance with the angle of view in the Y-direction can be projected, which may be preferable.

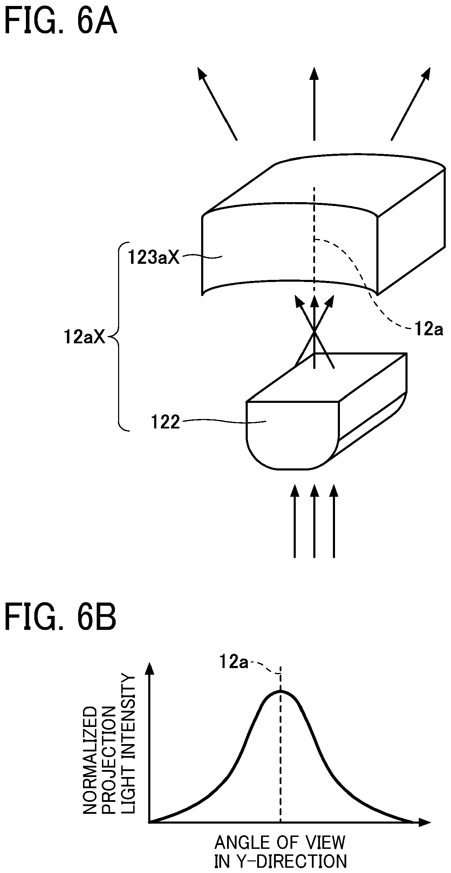

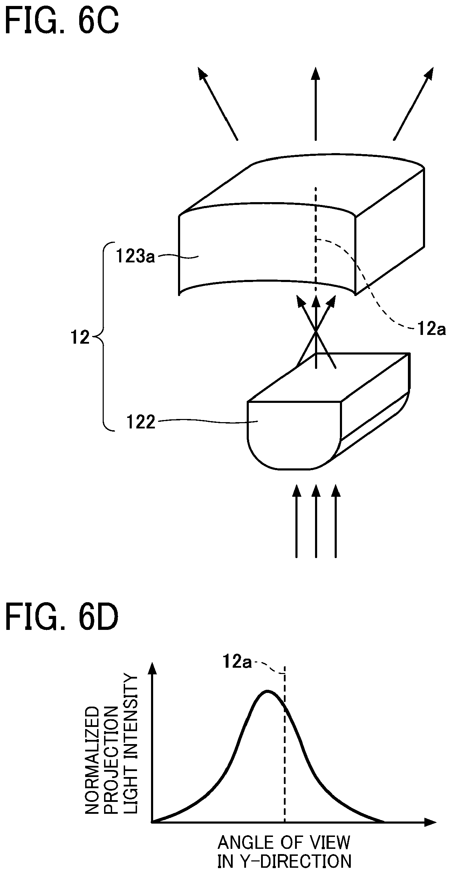

Further, the regulating unit that regulates the light intensity distribution of the laser light in accordance with the angle of view of the light-projection optical system 12 is not limited to the gable-roof optical element 123, but the regulating unit can employ an eccentric optical element 123a illustrated in FIG. 6. The eccentric optical element 123a is an optical element having a curvature in a direction orthogonal to the X-direction, and the eccentric optical element 123a has eccentricity to the projection light center axis 12a.

FIG. 6 illustrates a diagram illustrating an example of the eccentric optical element 123a.

FIG. 6A illustrates an example of configuration of an optical element 123aX according to a comparative example. FIG. 6B illustrates the normalized projection light intensity of the optical element 123aX of FIG. 6A.

FIG. 6C illustrates an example of configuration of the eccentric optical element 123a according to the first embodiment. FIG. 6D illustrates the normalized projection light intensity of the eccentric optical element 123a of FIG. 6C.

As illustrated in FIG. 6A, the optical element 123aX is an optical element having a curvature in a direction orthogonal to the X-direction, but has no eccentricity with respect to the light projection center axis 12a. When the light-projection optical system 12aX is configured by including the optical element 123aX, the normalized projection light intensity Ipx becomes a distribution symmetrical relative to the light projection center axis 12a as illustrated in FIG. 6B.

By contrast, as illustrated in FIG. 6C, as to the eccentric optical element 123a according to the first embodiment, the center of curvature is set eccentric to the -Y-direction with respect to the projection light center axis 12a. In this case, as illustrated in FIG. 6D, the normalized projection light intensity Ip has a distribution having the maximum value of the normalized projection light intensity shifted to the -Y-direction by setting the center of curvature eccentric to the -Y-direction.

By configuring the light-projection optical system including the eccentric optical element 123a (see FIG. 6C), the normalized projection light intensity Ip having the light intensity distribution having the greater light intensity at the lower side can be obtained as illustrated in FIG. 4. Further, the object detection apparatus 100 may be provided with the optical element 123aX of the comparative example (see FIG. 6A).

### (Object Detection Apparatus)

As to the above described first embodiment, the object detection apparatus 100 is configured by setting the focusing light center axis 14a non-parallel to the projection light center axis 12a. For example, the projection light center axis 12a is inclined 45 degrees relative to the Y-direction to configure the light-projection optical system 12, the focusing light center axis 14a is inclined 32 degrees relative to the Y-direction to configure the light-receiving optical system 14, with which the projection light center axis 12a and the focusing light center axis 14a are set non-parallel.

By setting the projection light center axis 12a and the focusing light center axis 14a non-parallel, and by setting the inclination angle of the light-projection optical system 12 and the inclination angle of the focusing light center axis 14a to set the interval "d" of the projection light intersection position 12b and the focusing light intersection position 14b smaller, the interval "d" can be set smaller without setting the too-small interval between the semiconductor laser 11 and the photodiode 15. With this configuration, the deflection face 13a of the MEMS mirror 13 can be made smaller.

By reducing the size of the deflection face 13a and thereby reducing the size and weight of the movable part, the movable part can be reciprocally rotated with a greater amplitude, and the optical scanning by the MEMS mirror 13 can be performed with a wider angle.

Further, by reducing the size and weight of the movable part, the drive frequency of the MEMS mirror 13 can be selected flexibly. With this configuration, the drive frequency of the MEMS mirror 13, which is deviated from a frequency range causing disturbance oscillation, can be selected, and thereby the resonance with the disturbance oscillation can be prevented, and abnormality or damage of the MEMS mirror 13 caused by the resonance can be prevented.

Further, in the first embodiment, the gable-roof optical element 123 is used as the regulating unit that regulates the light intensity distribution of the laser light in accordance with the angle of view of the light-projection optical system 12 in the Y-direction.

The gable-roof optical element 123 has the ridge 124 on the exit side of laser light, and a concave shape face having a curvature only at the incident side of the laser light in a direction perpendicular to the direction X where the ridge 124 extends along. Further, the roof gradient of the gable-roof optical element 123 is asymmetrically formed across the ridge 124.

By projecting the laser light having the greater light intensity to the region (direction) corresponding to the detection region 500 where probability of existence of object is higher using the gable-roof optical element 123, the light intensity of the return light 501 coming from the object existing within the detection region 500 can be increased, and thereby the detection sensitivity of object information can be enhanced.

Further, the object detection apparatus 100 can be configured using the gable-roof optical element 123 having the roof gradient formed symmetrically across the ridge 124. In this case, the light intensity distribution that is asymmetrical relative to the projection light center axis 12a cannot be obtained, but the laser light having the uniform light intensity in accordance with the angle of view in the Y-direction can be projected to the detection region 500.

Further, instead of the gable-roof optical element 123, the eccentric optical element 123a can be used as the regulating unit, in which the laser light having the greater light intensity is projected to a region (direction) corresponding to the detection region 500 where probability of existence of object is higher.

Further, in the first embodiment, the light-projection optical system 12 and the light-receiving optical system 14 are configured to set the angle of view that the normalized projection light intensity Ip of the light-projection optical system 12 becomes the maximum, and the angle of view that the normalized received light intensity Ir of the light-receiving optical system 14 becomes the maximum, are different.

With this configuration, the uniform region 42 can be formed as the angle of view region where the synthesized normalized intensity Is, which is obtained by multiplying the normalized projection light intensity Ip and the normalized received light intensity Ir for each angle of view, becomes uniform region.

By using the configuration that the photodiode 15 can receive the return light 501 entering the light-receiving optical system 14 within the angle of view corresponding to the uniform region 42, the object information can be detected with a substantially uniform detection sensitivity irrespective to the angle of view in the Y-direction.

Further, in the first embodiment, the semiconductor laser 11 and the photodiode 15 are arranged side by side in the direction orthogonal to the X-direction. With this configuration, the object detection apparatus 100 can be downsized in the direction orthogonal to the X-direction.

Further, in the first embodiment, the laser light is scanned in the X-direction. With this configuration, the detection range of the object detection apparatus 100 in the X-direction can be enlarged.

Further, in the first embodiment, the spread angle of the laser light in the Y-direction is set greater the spread angle of the laser light in the X-direction. With this configuration, the object can be detected in the wider detection range in the X-direction and in the Y-direction, which is the two-dimensional direction.

Further, in the first embodiment, the semiconductor laser 11, the light-projection optical system 12, the light-receiving optical system 14, and the photodiode 15 are provided to the side of the detection region 500 relative to the deflection face 13a. With this configuration, the object detection apparatus 100 can be downsized compared to a configuration providing the semiconductor laser 11, the light-projection optical system 12, the light-receiving optical system 14, and the photodiode 15 to a side opposite to the detection region 500 relative to the deflection face 13a.

### (Second Embodiment)

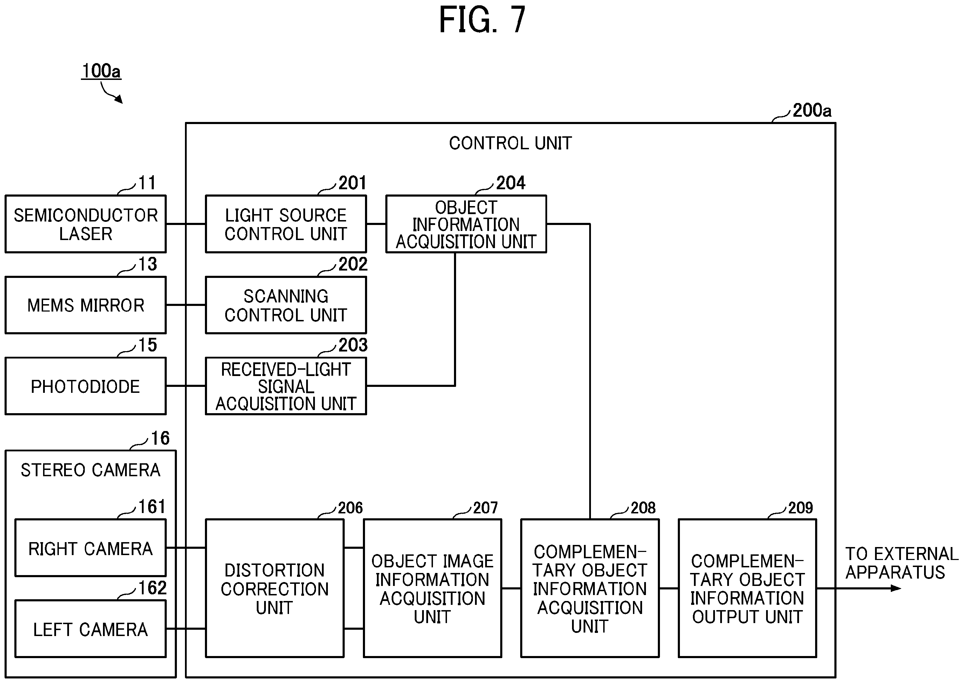

Hereinafter, with reference to FIG. 7, a description is given of an object detection apparatus 100a according to a second embodiment. FIG. 7 is an example of functional block diagram of the control unit 200a provided for the object detection apparatus 100a.

As illustrated in FIG. 7, the control unit 200a includes, for example, a distortion correction unit 206, an object image information acquisition unit 207, a complementary object information acquisition unit 208, and a complementary object information output unit 209.

The functions of the distortion correction unit 206, the object image information acquisition unit 207, and the complementary object information acquisition unit 208 are implemented by executing one or more programs by the CPU 21 of FIG. 2. Further, the function of the complementary object information output unit 209 is implemented by the input/output I/F 28 of FIG. 2.

The distortion correction unit 206 receives a right-eye image captured by a right camera 161, and a left-eye image captured by a left camera 162 of a stereo camera 16, and corrects image distortion of the right-eye image and the left-eye image. The distortion of image may include distortion of barrel type, thread winding type around an outer edge of image, and trapezoidal distortion. The distortion correction unit 206 outputs the corrected right-eye image and the left-eye image to the object image information acquisition unit 207. Each of the right camera 161 and the left camera 162 is an example of an image capture device that captures an image.

The object image information acquisition unit 207 generates a distance image based on a disparity detected by the image processing using the right-eye image and the left-eye image, and outputs the generated distance image to the complementary object information acquisition unit 208.

The complementary object information acquisition unit 208 acquires complementary object information based on the object information received from the object information acquisition unit 204 and the distance image received from the object image information acquisition unit 207.

In this description, a plurality of object information can be acquired using different methods. The complementary object information indicates object information that is obtained by complementing one object information using another object information, or complementing one object information using another object information and further complementing another object information using one object information. In the second embodiment, as to the plurality of object information, one information is object information such as distance image detected by the TOF method, and the other information is object information such as distance image detected by using the stereo camera method.

As to the TOF method, the range or distance to the object can be detected with higher precision without dependence on the distance to the object, but the in-plane spatial resolution may become lower because the TOF method uses the return light 501 coming from the object by projecting the laser light by spreading the laser light.

Further, as to the stereo camera method, a higher in-plane spatial resolution can be obtained based on the resolution level of the right camera 161 and the left camera 162, but the detection precision of distance may become lower depending on the distance to the object.

By combining information obtained by using both of the TOF method and stereo camera method, the distance can be detected with higher precision and higher in-plane spatial resolution.

For example, one or more pixels corresponding between the distance image obtained by the object information acquisition unit 204 and the distance image obtained by the object image information acquisition unit 207 are determined.

Then, as to the corresponding one or more pixels, the distance detection value of the distance image obtained by the object information acquisition unit 204 is used, and as to the non-corresponding pixels, the distance detection value of the distance image obtained by the object image information acquisition unit 207 and corrected by using the distance detection value of the distance image at the corresponding pixel is used to generate and acquire a complementary distance image. The complementary distance image is complementary object information that can be obtained by complementing the in-plane spatial resolution of the distance image obtained by performing the TOF method using the distance image obtained by performing the stereo camera method.

The complementary object information acquisition unit 208 can output the acquired complementary distance image to an external apparatus or device, such as vehicle controller, via the complementary object information output unit 209.

As to the above described second embodiment, the complementary distance image that is acquired or obtained from the distance image obtained by performing the TOF method and the distance image obtained by performing the stereo camera method is output. With this configuration, the distance image having the higher in-plane spatial resolution and higher detection precision, which is obtained by complementing the spatial resolution of the distance image obtained by the TOF method using the distance image obtained by the stereo camera method, can be output.

In the second embodiment, an example of complementing the in-plane spatial resolution of the distance image obtained by the TOF method is described, but is not limited thereto. For example, color information not obtainable by the TOF method may be complemented by using the captured image. If the object detection apparatus 100a is applied to a vehicle or the like by complementing the color information, color information of traffic signals and traffic signs can be used. Further, other information can be complemented.

Further, the stereo camera is described as an example of the imaging unit, but is not limited thereto. For example, one camera can be used as the imaging unit.

The effects other than the above-described effects are the same as those of the first embodiment.

### (Third Embodiment)

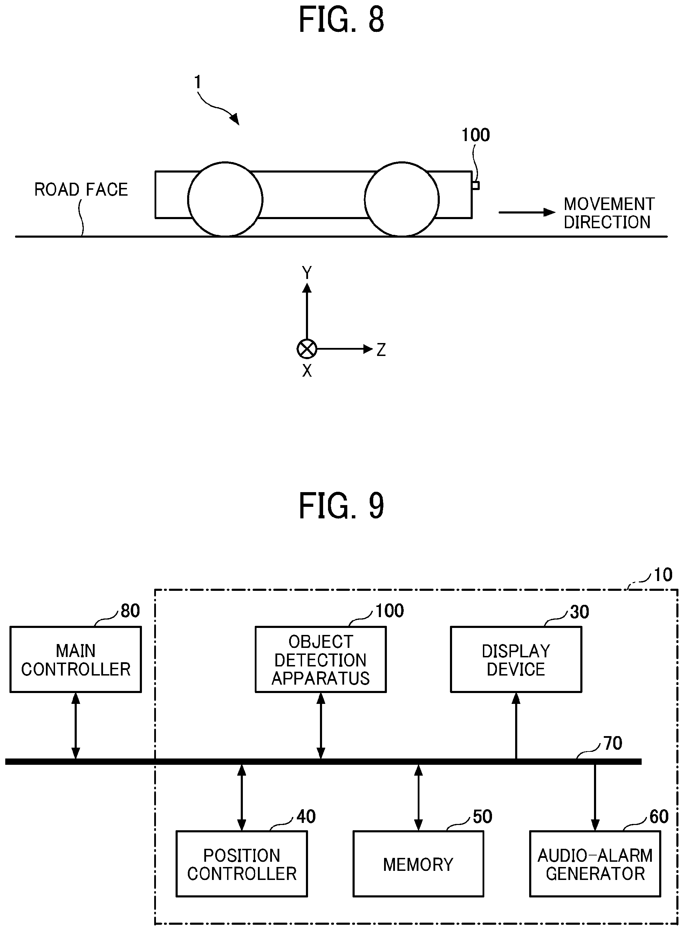

Hereinafter, with reference to FIG. 8, a description is given of a movable apparatus according to a third embodiment. FIG. 8 is an example of configuration of a movable apparatus 1 including the object detection apparatus 100. The movable apparatus 1 is, for example, an unmanned transport vehicle that transports a luggage to a destination.

The object detection apparatus 100 is disposed at the front of the movable apparatus 1 to acquire object information, such as distance image on the positive side of Z-direction of the movable apparatus 1. The information output from the object detection apparatus 100 can be used to detect whether an object, such as obstacle, exists in the positive side of Z direction, and to detect a position of the object as object information.

FIG. 9 is an example of hardware block diagram of the movable apparatus 1. As illustrated in FIG. 9, the movable apparatus 1 includes, for example, the object detection apparatus 100, a display device 30, a position controller 40, a memory 50, and an audio-alarm generator 60 as hardware resources. These hardware resources are electrically connected with each other via a bus 70 capable of transmitting signals and data.

In the third embodiment, a traveling management apparatus 10 is configured with the object detection apparatus 100, the display device 30, the position controller 40, the memory 50, and the audio-alarm generator 60. The traveling management apparatus 10 can be mounted on the movable apparatus 1. Further, the traveling management apparatus 10 is electrically connected to a main controller 80 of the movable apparatus 1.

The display device 30 is a display, such as liquid crystal display (LCD), which displays three dimensional information acquired by the object detection apparatus 100 and various setting information related to the movable apparatus 1.

The position controller 40 is an computing device, such as CPU controlling positions of the movable apparatus 1 based on the object information acquired by the object detection apparatus 100.

The audio-alarm generator 60 is a device, such as speaker, which determines whether an obstacle can be avoided from the three dimensional data acquired by the object detection apparatus 100, and outputs audio information to one or more persons existing around the movable apparatus 1 if the audio-alarm generator 60 determines that the avoiding the object is impossible.

With this configuration, the movable apparatus including the object detection apparatus 100 can be provided.

Further, the movable apparatus provided with the object detection apparatus 100 is not limited to the unmanned transport vehicle. The movable apparatus provided with the object detection apparatus 100 can be mounted on any vehicles, such as automobiles, and flying apparatuses, such as drones. Further, the object detection apparatus 100 can be installed to any information terminal, such as smartphone or tablet, in addition to the movable apparatus.

In the third embodiment, the object detection apparatus 100 has the configuration and function of the control unit 200, but is not limited thereto. For example, the configuration and a part of all of the functions of the control unit 200 can be included in an apparatus mounting the object detection apparatus 100, such as an external controller included in the movable apparatus 1, and an apparatus connectable to the object detection apparatus 100.

The effects other than the above-described effects are the same as those of the first and second embodiments.

As to the above described embodiment, the deflection face of the optical scanning unit can be downsized.

Numerous additional modifications and variations are possible in light of the above teachings. It is therefore to be understood that, within the scope of the appended claims, the disclosure of this specification can be practiced otherwise than as specifically described herein. Any one of the above-described operations may be performed in various other ways, for example, in an order different from the one described above.

The light projected by the object detection apparatus 100 is not limited to laser light, but may be light having no directivity, or may be an electromagnetic wave having a long wavelength, such as a radar or the like.

Each of the functions of the above-described embodiments can be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA), system on a chip (SOC), graphics processing unit (GPU), and conventional circuit components arranged to perform the recited functions.

The functional units according to the embodiment of this disclosure can be implemented by executable programs described in C, C++, C#, Java (registered trademark), or the like, and the programs according to the embodiment can be stored in hard disk, device-readable storage medium, such as compact disc (CD)-ROM, compact disc re-writable (CD-RW), magneto-optical (MO) disc, digital versatile disc (DVD), flexible disk, erasable programmable read-only memory electrically erasable programmable read-only memory (EEPROM: registered trademark), and erasable programmable read-only memory (EPROM), and can be transmitted through a network in a format that can be used executed at other devices.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier means or medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside the apparatus as long as the HDD is accessible. In this example, the CPU, such as a cashe memory of the CPU, and the RAM may function as a physical memory or a primary memory of the apparatus, while the HDD may function as a secondary memory of the apparatus.

## Claims

1. An object detection apparatus (100) comprising:
a light-emitting unit (11) configured to emit light;
an optical scanning unit (13) configured to rotate a deflection face (13a) to deflect the light used as scanning light;
a light-projection optical system (12) configured to project the scanning light to a detection region (500);
a light-receiving optical system (14) configured to receive light reflected or light scattered from an object existing within the detection region (500), respectively as reflection light and scattered light; and
a light receiving unit (15) configured to output at least a received-light signal of the reflection light or a received-light signal of the scattered light received by the light receiving system,
wherein a projection light center axis of the light-receiving optical system (14) is non-parallel with respect to a focusing light center axis of the light-projection optical system (12).

2. The object detection apparatus (100) according to claim 1,
wherein the light-receiving optical system (14) receives light deflected by the deflection face (13a) when any one of the reflection light or the scattered light enters the deflection face (13a), and
wherein a projection light intersection position (12b) where the projection light center axis intersects the deflection face (13a) and a focusing light intersection position (14b) where the focusing light center axis intersects the deflection face (13a) are different.

3. The object detection apparatus (100) according to claim 1,
wherein an angle of view in which normalized projection light intensity of the light-projection optical system (12) becomes maximum, and an angle of view in which normalized received light intensity of the light-receiving optical system (14) becomes maximum, are different.

4. The object detection apparatus (100) according to claim 1 or claim 2,
wherein a product of the normalized projection light intensity of the light-projection optical system (12) and the normalized received light intensity of the light-receiving optical system (14) becomes uniform in a given angle of view.

5. The object detection apparatus (100) according to any one of claims 1 to 4, further comprising a regulating unit (123, 123a) configured to regulate a light intensity distribution of the light in accordance with the angle of view of the light-projection optical system (12).

6. The object detection apparatus (100) according to claim 5,
wherein the regulating unit (123) is a gable-roof optical element (123).

7. The object detection apparatus (100) according to claim 6,
wherein the gable-roof optical element (123) has a ridge (124), and a roof gradient of the gable-roof optical element (123) is formed asymmetrically across the ridge (124).

8. The object detection apparatus (100) according to claim 6 or claim 7, wherein the ridge (124) is formed on a light exit side of the gable-roof optical element (123).

9. The object detection apparatus (100) according to claim 8,
wherein a light incident side of the gable-roof optical element (123) is formed in a concave shape having a curvature only in a direction orthogonal to a direction in which the ridge (124) extends along.

10. The object detection apparatus (100) according to claim 1,
wherein the optical scanning unit (13) scans the light in a scanning direction intersecting the given direction.

11. The object detection apparatus (100) according to claim 10,
wherein a spread angle of the light in the given direction is greater than a spread angle of the light in the scanning direction.

12. The object detection apparatus (100) according to any one of claims 1 to 11,
wherein the light-emitting unit (11), the light-projection optical system (12), the light-receiving optical system (14), and the light receiving unit (15) are disposed at a side of the detection region (500) relative to the deflection face (13a).

13. The object detection apparatus (100) according to any one of claims 1 to 12, further comprising an object information output unit (205) configured to output object information, acquired based on a time difference between a light emission start time of the light by the light-emitting unit (11) and a light reception time of the reflection light or the scattered light by the light receiving unit (15).

14. The object detection apparatus (100) according to claim 13, further comprising;
an image capture device (161, 162) configured to capture an image; and
a complementary object information output unit (209) configured to complement the object information based on the captured image, and outputs the complemented object information.

15. A movable apparatus (1) comprising:
the object detection apparatus (100) according to any one of claims 1 to 14.
